# EUROPÄISCHE PATENTSCHRIFT

(11) **EP 3 112 676 B1**
(45) Veröffentlichungstag und Bekanntmachung des Hinweises auf die Patenterteilung: **26.12.2018**
(21) Anmeldenummer: 16173903.2
(22) Anmeldetag: 04.01.2007
(51) Int. Cl.: F03D 7/02, F03D 7/04

(54) **VERFAHREN ZUM BETREIBEN EINER WINDENERGIEANLAGE UND WINDENERGIEANLAGE**
METHOD FOR OPERATING A WIND FARM AND WIND FARM
PROCEDE DE FONCTIONNEMENT D'UNE EOLIENNE ET EOLIENNE

(30) Priorität: 11.01.2006 DE 102006001613
(43) Veröffentlichungstag der Anmeldung: 04.01.2017
(62) Teilanmeldung aus: 12169956.5
(73) Patentinhaber: Senvion GmbH, 22297 Hamburg (DE)
(72) Erfinder: STEINER, Stefan, 24943 Flensburg (DE); VON MUTIUS, Martin, 24358 Ascheffel (DE)
(74) Vertreter: Wallinger Ricker Schlotter Tostmann

(56) Entgegenhaltungen:
- EP-A2- 0 942 168
- EP-A2- 1 612 414
- WO-A1-01/66940
- DE-C1- 19 626 402
- Bradford S. Linscott ET AL: "The Mod-2 Wind Turbine Development Project", , 31. Juli 1981 (1981-07-31), Seiten 1-23, XP055034683, Gefunden im Internet: URL:http://ntrs.nasa.gov/archive/nasa/casi .ntrs.nasa.gov/19810019068_1981019068.pdf [gefunden am 2012-08-03]
- "Technical Specification of the NEG Micon NM750/48 Wind Turbine", Planet - project planning network, 25. Februar 1999 (1999-02-25), XP055165968, Gefunden im Internet: URL:http://www.pcj.com/dnn/Portals/0/Docum ents/Appendix 8.PDF [gefunden am 2015-01-29]
- E Muljadi ET AL: "Pitch-Controlled Variable-Speed Wind Turbine Generation National Renewable Energy Laboratory", , 7. Oktober 1999 (1999-10-07), XP055166089, Gefunden im Internet: URL:http://www.nrel.gov/docs/fy00osti/2714 3.pdf [gefunden am 2015-01-30]

## Beschreibung

Die Erfindung betrifft ein Verfahren zum Betreiben einer Windenergieanlage, wobei die Windenergieanlage einen Rotor, wenigstens ein winkelverstellbares Rotorblatt, einem Turm, eine Betriebsführungseinrichtung und ein Sicherheitssystem aufweist. Die Erfindung betrifft ferner eine Windenergieanlage mit einem Rotor, wenigstens einem winkelverstellbaren Rotorblatt, einem Turm, einer Betriebsführungseinrichtung und einem Sicherheitssystem.

Verfahren zum Betreiben einer Windenergieanlage und Windenergieanlagen sind an sich bekannt. Hierzu wird beispielsweise auf das Lehrbuch "Windkraft Systemauslegung, Netzintegration und Regelung", Siegfried Heier, 4. Auflage, B.G.Teubner, Februar 2005, hingewiesen. Der Betrieb von Windenergieanlagen und Windenergieanlagen selbst ist kritisch im Hinblick auf deren Auslegung, insbesondere im Hinblick auf Sicherheitsaspekte. Insbesondere bei starken Winden in Verbindung mit einem Netzausfall, bei dem das durch den Wind im Rotor erzeugte aerodynamische Drehmoment auf keinen Widerstand durch den Generator trifft, kann es zu extremen Turmlasten, insbesondere Turmfußbiegemomenten, unkontrollierten Blattwinkelverstellungen und ggf. sogar der Auslösung einer Sicherheitskette kommen. Durch den Ausfall des Netzes bzw. allgemeiner durch einen Lastabwurf des Generators beginnt der Rotor bei starkem Wind sich zu beschleunigen, bis das Bremssystem der Windenergieanlage den Rotor anfängt zu bremsen. In Abhängigkeit der Stärke der Bremsleistung treten unterschiedlich starke Belastungen an der Windenergieanlage auf.

Aus der EP 1 612 414 A2 ist ein Verfahren zum Reduzieren einer auf eine Windturbine wirkende Last, eine Reduzierung der Auslenkung ihrer Rotorblätter oder eine Begrenzung ihrer Spitzendrehzahl bekannt. Dabei werden historische Daten betreffend die Pitch-Einstellungen, windbezogene Daten oder beides gespeichert. Die gespeicherten historischen Daten werden analysiert, um zu bestimmen, ob ein schneller Pitch-Vorgang stattfindet oder die Windgeschwindigkeit abnimmt. Ein minimaler Pitch-Winkel, ein Pitch-Verstellratenlimit oder beides werden in die Pitch-Winkelsteuerung der Rotorblätter auf der Grundlage dieser Analyse integriert.

Es ist Aufgabe der vorliegenden Erfindung, ein sicheres Verfahren zum Betreiben einer Windenergieanlage und eine entsprechende sichere Windenergieanlage mit reduzierten Extrembelastungen anzugeben.

Die Aufgabe wird durch ein Verfahren zum Betreiben einer Windenergieanlage gemäß Anspruch 1 gelöst.

Vorzugsweise ist die mittlere Winkelverstellungsrate kleiner als 6°/s, insbesondere kleiner als 5°/s, insbesondere kleiner als 4,6°/s, insbesondere kleiner als 4,5°/s.

Vorzugsweise wird die Winkelverstellungsrate gesteuert oder geregelt und mit zunehmender Vergrößerung des Blattwinkels und/oder einer Abnahme der Drehzahl weiter reduziert.

Vorzugsweise liegt das Störsignal bei einem Lastabwurf eines Generators gekoppelt mit einer extremen Windbö vor, wobei die Auftrittswahrscheinlichkeit der Windbö weniger als einmal in drei Monaten, insbesondere weniger als einmal im Jahr, ist.

Durch das erfindungsgemäße Verfahren ist es möglich, selbst bei extremen Windböen und bei gleichzeitigem Lastabwurf des Generators, die Windenergieanlage so zu betreiben, dass keine zu hohen Belastungen, beispielsweise seitens eines Turmfußbiegemomentes oder eines Rotorbiegemomentes, entstehen.

Die niedrige Winkelverstellungsrate dient insbesondere dazu zu verhindern, dass die Rotorblätter zu schnell gedreht werden, so dass ein ungewünschter Umkehrschub verhindert wird. Zugrunde liegt die Erkenntnis, dass eine möglichst langsame Winkelverstellungsrate zur Abbremsung des Rotors die Belastungen reduziert. Im Stand der Technik ist von derart niedrigen Winkelverstellungsraten bei Störfällen wie z.B. Lastabfall bislang abgesehen worden, weil die bei Böen auftretenden Überdrehzahlzustände zu unakzeptabel hohen Belastungen geführt haben.

Im Rahmen der Erfindung bedeutet eine gemittelte Winkelverstellungsrate, insbesondere eine Mittelung der Winkelverstellungsrate über den Zeitraum, in dem das Abbremsen über eine Winkelverstellung erfolgt. Im Rahmen der Erfindung beinhaltet der Begriff Rotor insbesondere auch die Begriffe Triebstrang, schnelle Welle, Generatorläufer, Getriebe, Rotorwelle (= langsame Welle) Rotornabe und Rotorblätter. Ein Abbremsen des Rotors bedeutet insbesondere das Abbremsen des Triebstrangs.

Nach dem Auslösen des Sicherheitssystems kann der Rotor insbesondere vorzugsweise unter Übergehung der Betriebsführungseinrichtung abgebremst werden. Die Betriebsführungseinrichtung kann allerdings auch Teil des Sicherheitssystems sein, bzw. das Sicherheitssystem kann Teil der Betriebsführungseinrichtung sein, so dass die Betriebsführungseinrichtung nicht notwendigerweise für das Bremsen nach Auslösen des Sicherheitssystems übergangen werden muss.

Die Form und die Stärke einer Windbö kann mit einem Normalwindprofilmodell berechnet werden, wie dieses beispielsweise in dem Lehrbuch "Wind Energy Handbook", Tony Burton, David Sharpe, Nick Jenkins, Ervin Bossanyi, John Wiley & Sons Ltd., November 2002, auf den Seiten 214 bis 218 angegeben ist. Insbesondere die Formel (5.1) ist hier von Relevanz, wobei für den erfindungsgemäßen Fall der Auftrittswahrscheinlichkeit von weniger als einmal in drei Monaten für den unteren Grenzwert der drei Monate ein Faktor β von ca. 4,6 anzusetzen ist. Der Einfachheit halber wird für die Zeitdauer der extremen Windbö (in diesem Dokument mit "gust" beschrieben) mit 10 s angesetzt. Für die Auslegung einer Windenergieanlage und die Höhe der ersten und zweiten Drehzahlgrenze wird je nach Aufstellungsort der Windenergieanlage von vorbestimmten bzw. vorbestimmbaren Lastfällen ausgegangen, die im Betrieb der Windenergieanlage bzw. von der Windenergieanlage ohne Schädigung derselben abgefangen werden können müssen. Derartige Lastfälle definiert beispielsweise der Germanische Lloyd bzw. entsprechend andere Sicherheitsinstitute. Je nach Definition der Lastfälle dienen entsprechende Computerprogramme, die beispielsweise dem Computerprogramm "Flex" des Herrn Stig Oye entsprechen bzw. von diesem abgeleitet bzw. weiterentwickelt wurden, um Windenergieanlagen und den Betrieb von Windenergieanlagen zu simulieren und so je nach Lastfall herauszufinden, welche Belastungen auf die Windenergieanlage im Betrieb auftreten können. Diese Belastungen werden üblicherweise in vorbestimmten Wahrscheinlichkeiten auftreten. Beispielsweise wird in den Dokument "Wind Energy Handbook" von Tony Burton et al., das vorstehend genannt wurde, im "load case 1.5" auf S. 216 bis S. 218 von einer 1-Jahres Bö ausgegangen, also einer extrem starken Bö, die mit einer Wahrscheinlichkeit von einmal jährlich auftritt.

Eine zweite Drehzahlgrenze wird bei einer Windbö mit einer Auftrittswahrscheinlichkeit von einmal im Jahr nicht überschritten. Beispielsweise gibt der Germanische Lloyd vor, dass bei einem vorbestimmten Lastfall wie beispielsweise dem Auftritt einer "Einjahresbö", also einer extremen Windbö, die mit einer Auftrittswahrscheinlichkeit von einmal jährlich auftritt, und zwar an dem entsprechenden Standort der Windenergieanlage, gewisse Beanspruchungen im Rotor beispielsweise nicht überstiegen werden dürfen bzw. die auftretenden Beanspruchungen im Vergleich bzw. im Verhältnis zu den maximal auftretenden Beanspruchungen ein definiertes Sicherheitsniveau aufweisen müssen.

Ein noch sicherer Betrieb ist möglich, wenn die Winkelverstellungsrate des wenigstens einen Rotorblatts nach Auftritt des Störsignals vorzugsweise kleiner als 4,6°/s, insbesondere kleiner 4,5°/s, ist.

Die Winkelverstellungsrate wird zweckmäßigerweise von einer der Betriebsführungseinrichtung zugeordneten Regelvorrichtung oder einer separaten Regelvorrichtung geregelt. Hierbei gibt die Betriebsführungseinrichtung die Winkelverstellungsrate vor, und die Regelvorrichtung regelt dann die Winkelverstellungsrate bzw. die Verstellung des Winkels des jeweiligen Rotorblattes.

Vorzugsweise wird die Winkelverstellungsrate des wenigstens einen Rotorsblatts bei Überschreiten eines vorgebbaren Blattwinkels auf eine kleine Winkelverstellungsrate, insbesondere auf eine Winkelverstellungsrate geändert, die kleiner als die Hälfte, insbesondere kleiner als ein Viertel der vorherigen Winkelverstellungsrate ist.

Bei Auftreten des Störsignals wird ausgehend von der existierenden Blattwinkelstellung des Rotorblatts mit der erfindungsgemäßen Winkelverstellungsrate in Richtung Fahnenstellung der Blattwinkel gedreht. Hierbei kann der Ausgangspunkt eine Nullstellung des Rotorblatts sein. Es kann allerdings auch eine Stellung vorhanden sein, die schon fortgeschritten in Richtung Fahnenstellung ist. Die Nullstellung ist vorzugsweise die Rotorblattstellung, mit der im Betrieb mit optimaler Drehzahl die maximale Leistung erzielt werden kann, häufig auch mit Betriebsstellung bezeichnet. Die Fahnenstellung ist vorzugsweise diejenige Stellung, in der keine Leistung erzeugt werden kann. Die Rotorblätter sind hierbei, wie eine Fahne, aus dem Wind gedreht.

Vorzugsweise ist eine erste Drehzahlgrenze in einem Bereich von mehr als 15 % oberhalb einer Nenndrehzahl der Windenergieanlage, die insbesondere eine Nennleistung von mehr als 1,45 MW aufweist. Die Nenndrehzahl ist im Rahmen der Erfindung eine Drehzahl, bei der die Windenergieanlage erstmals eine Nennleistung erreicht. Die zugehörige Windgeschwindigkeit heißt dann Nennwindgeschwindigkeit. Insbesondere bei Windenergieanlagen, bei denen bei hohen Windgeschwindigkeiten oberhalb der Nennwindgeschwindigkeit die Arbeitsdrehzahl reduziert wird, kann sich der Begriff der Nenndrehzahl auch auf die reduzierte Arbeitsdrehzahl am jeweiligen Arbeitspunkt beziehen. Eine Nenndrehzahl kann beispielsweise bei einer Windenergieanlage mit einer Nennleistung von 1,5 MW 1.800 Umdrehungen pro Minute (rpm) sein. Diese Nenndrehzahl wird an dem Läufer des Generators oder an der schnellen Welle des Getriebes gemessen. Es kann allerdings auch eine andere Nenndrehzahl definiert werden, nämlich diejenige, die an der Rotornabe herrscht bzw. die im Generator herrscht, wenn kein Getriebe vorhanden ist. Diese entsprechenden Nenndrehzahlen können vorzugsweise im Bereich von 5 bis 20 Umdrehungen pro Minute sein, insbesondere vorzugsweise bei 8 bis 18 Umdrehungen pro Minute. Unter Nennleistung wird die maximale Dauerleistung der Windenergieanlage verstanden, also diejenige Leistung, bei der ungefähr ein Optimum an entnommener Leistung bei gleichzeitig möglichst geringem Verschleiß der Windenergieanlage vorherrscht. Die Nennleistung wird insbesondere bei Offshore-Windenergieanlagen, insbesondere an Starkwindorten, die Leistung sein, bei der die Windenergieanlage über die gesamte Lebensdauer die größte Gesamtleistung erzeugt.

Vorzugsweise liegt die erste Drehzahlgrenze zwischen 20 und 35 %, insbesondere zwischen 22 und 28 % oberhalb der Nenndrehzahl der Windenergieanlage. Insbesondere bevorzugt ist ein Wert ungefähr 25 % oberhalb der Nenndrehzahl der Windenergieanlage.

Eine zweite Drehzahlgrenze liegt vorzugsweise in einem Bereich von 35 % bis 45 % oberhalb einer Nenndrehzahl der Windenergieanlage, die insbesondere eine Nennleistung von mehr als 1,45 MW aufweist. Diese zweite Drehzahlgrenze, bei deren Überschreitung das Sicherheitssystem ausgelöst wird, liegt oberhalb der bisher für Anlagen größer 1,45 MW im Stand der Technik üblichen Drehzahlgrenze. Bei kleineren und somit weniger trägen und belastungskritischen Anlagen (z.B. 600 kW) ist diese Drehzahlgrenze höher anzusetzen.

Vorzugsweise liegt die zweite Drehzahlgrenze in einem Bereich von 5 % bis 20 % oberhalb der ersten Drehzahlgrenze der Windenergieanlage, wobei der niedrige Bereich insbesondere bei sehr steifen, z.B. getriebelosen Triebsträngen interessant ist, da dort keine Drehschwingungen auftreten.

Insbesondere vorzugsweise liegt eine dritte Drehzahlgrenze im Bereich von 10 bis 20 %, insbesondere von 15 bis 17 % oberhalb einer Nenndrehzahl einer Windenergieanlage, die insbesondere eine Nennleistung von mehr als 1,45 MW aufweist. Die dritte Drehzahlgrenze liegt vergleichsweise niedrig. Das heißt, dass Abbremsen der Windenergieanlage über die aerodynamische Bremse durch Verstellen des Winkels des wenigstens einen Rotorblatts durch eine relativ niedrige Winkelverstellungsrate beginnt schon bei einer relativ niedrigen Drehzahlgrenze.

Im Rahmen der Erfindung bedeutet bei Vorhandensein eines Störsignals insbesondere auch bei Auftreten eines Störsignals.

Vorzugsweise wird die zweite Drehzahlgrenze bei einer Windbö mit einer Auftrittswahrscheinlichkeit von einmal im Jahr nicht überschritten. Dies bedeutet insbesondere, dass die Auftrittswahrscheinlichkeit einer derartigen Belastung so gering ist, dass sie mit einem relativ geringen Sicherheitsniveau nachgewiesen werden kann.

Vorzugsweise ist das Störsignal ein Überschreiten einer dritten Drehzahlgrenze, welche kleiner ist als die erste Drehzahlgrenze, ein Lastabwurf des Generators, ein Fehler im Netz und/oder ein Fehler in der Winkelverstellung wenigstens eines Rotorblatts. Vorzugsweise ist die Winkelverstellungsrate des wenigstens einen Rotorblatts bei Vorhandensein des Störsignals insbesondere kleiner 4,6°/s, insbesondere kleiner 4,5°/s. Die Winkelverstellungsrate ist vorzugsweise von einer der Betriebsführungseinrichtung zugeordneten Regelvorrichtung oder einer separaten Regelvorrichtung regelbar. Die Winkelverstellungsrate des wenigstens einen Rotorblatts ist zweckmäßig bei Überschreitung eines vorgebbaren Blattwinkels auf eine kleinere Winkelverstellungsrate, insbesondere auf eine Winkelverstellungsrate, die kleiner als die Hälfte, insbesondere kleiner als ein Viertel der vorherigen Winkelverstellungsrate, änderbar. Alternativ zur Regelung durch die Regelvorrichtung kann die Reduzierung der Verstellrate auch durch eine geeignete Hardwareanordnung, z.B. gestufte Akkupakete zur Energieversorgung der Verstellantriebe, erfolgen.

Die erste Drehzahlgrenze liegt vorzugsweise in einem Bereich von mehr als 15 % oberhalb einer Nenndrehzahl der Windenergieanlage, die insbesondere eine Nennleistung von mehr als 1,45 MW aufweist. Bei einer Nenndrehzahl von 1.800 Umdrehungen pro Minute ist die erste Drehzahlgrenze dann vorzugsweise in einem Bereich von mehr als 2.070 Umdrehungen pro Minute und insbesondere vorzugsweise in einem Bereich von mehr als 2.160 Umdrehungen pro Minute. Vorzugsweise liegt die erste Drehzahlgrenze zwischen 20 und 35 %, insbesondere zwischen 22 und 28 % oberhalb der Nenndrehzahl der Windenergieanlage. Dieses entspricht bei einer Nenndrehzahl von 1.800 einem Bereich zwischen 2.160 und 2.430, insbesondere einem Bereich von 2.196 bis 2.304 Umdrehungen pro Minute.

Vorzugsweise liegt die zweite Drehzahlgrenze in einem Bereich von 35 % bis 45 % oberhalb einer Nenndrehzahl der Windenergieanlage, die insbesondere eine Nennleistung von mehr als 1,45 MW aufweist. Bei einer Nenndrehzahl von 1.800 Umdrehungen pro Minute entspricht dieses einem Bereich von 2.430 Umdrehungen pro Minute bis 2.610 Umdrehungen pro Minute.

Vorzugsweise liegt die zweite Drehzahlgrenze in einem Bereich von 5 % bis 20 % oberhalb der ersten Drehzahlgrenze der Windenergieanlage. Dieses ist bei einer ersten Drehzahlgrenze von 2.200 Umdrehungen pro Minute von 2.310 bis 2.640 Umdrehungen pro Minute.

Vorzugsweise liegt die dritte Drehzahlgrenze in einem Bereich von 10 % bis 20 %, insbesondere von 15 % bis 17 %, oberhalb einer Nenndrehzahl der Windenergieanlage, die insbesondere eine Nennleistung von mehr als 1,45 MW aufweist. Dieses ist bei einer Nenndrehzahl von 1.800 Umdrehungen pro Minute in einem Bereich von 1.980 bis 2.160 Umdrehungen pro Minute, insbesondere in einem Bereich von 2.070 bis 2.106 Umdrehungen pro Minute. Vorzugsweise ist das Abbremsen des Rotors über die mechanische Bremsvorrichtung bei Unterschreiten einer vierten vorgebbaren Drehzahlgrenze, beispielsweise bei Nenndrehzahl, beendbar. Ferner ist vorzugsweise das Abbremsen des Rotors über die mechanische Bremsvorrichtung beendbar, wenn ein mittlerer Rotorblattwinkel einen vorgebbaren Grenzwert überschreitet und eine vorgebbare Zeit seit dem Beginn des Abbremsens des Rotors über die mechanische Bremsvorrichtung überschritten ist.

Die Aufgabe wird außerdem durch eine Windenergieanlage gemäß Anspruch 5 gelöst.

Zugrunde liegt die erfindungsgemäße Erkenntnis, dass einer übermäßigen Anregung einer Turmschwingung durch einen negativen Rotorschub entgegengewirkt werden kann, wenn mindestens für eine Zeitdauer einer halben Schwingungsperiode des Turms, vorteilhaft aber für die Zeitdauer einer ganzen Schwingungsperiode, die anfängliche Winkelverstellungsrate nach dem Störsignal auf niedrige Werte unter 6,5°/s begrenzt wird. Übliche Turmeigenfrequenzen liegen derzeit zwischen 0,2 - 0,4 Hz, d. h., dass eine Schwingungsperiode zwischen 2,5 und 5 Sekunden beträgt. Somit ist die Verstellrate bei einem steifen Turm für mindestens 1,3 Sekunden nach Auslösung des Störsignals, bei einem weichen Turm für 2,5 Sekunden auf den genannten Wert zu begrenzen. Wesentlich effektiver ist es jedoch, die Begrenzung für etwa 2,5 bzw. 5 Sekunden durchzuführen, um eine Anregung des ersten Schwingspiels des Turmes nach dem Störsignal bestmöglich zu vermeiden. Bei zukünftigen größeren Anlagen mit zu erwartenden niedrigeren Eigenfrequenzen sind die Verhältnisse natürlich entsprechend anzupassen.

Vorzugsweise ist die mittlere Winkelverstellungsrate kleiner als 6°/s, insbesondere kleiner als 5°/s, insbesondere kleiner als 4,5°/s.

Vorzugsweise ist die Winkelverstellungsrate steuerbar oder regelbar und mit zunehmender Vergrößerung des Blattwinkels und/oder Abnahme der Drehzahl weiter reduzierbar.

Vorzugsweise liegt das Störsignal bei einem Lastabwurf eines Generators gekoppelt mit einer extremen Windbö vor, wobei die Auftrittswahrscheinlichkeit der Windbö weniger als einmal in drei Monaten, insbesondere weniger als einmal im Jahr, ist.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage,
- Fig. 2: ein schematisches Blockdiagramm wesentlicher Komponenten einer Windenergieanlage,
- Fig. 3: schematische Diagramme für zwei verschiedene Lastfälle, die bei einer erfindungsgemäßen Windenergieanlage auftreten, nämlich
- Fig. 3a: die Windgeschwindigkeit über der Zeit einer berechneten Einjahresbö,
- Fig. 3b: die Winkelverstellungsrate über der Zeit,
- Fig. 3c: die Drehzahl über der Zeit,
- Fig. 3d: die elektrische Leistung über der Zeit,
- Fig. 3e: das Bremsmoment über der Zeit,
- Fig. 3f: ein Turmfußbiegemoment über der Zeit und
- Fig. 3g: das Rotordrehmoment über der Zeit,
- Fig. 4: schematische Diagramme von Werten zweier Windenergieanlagen, die auf der einen Seite (durchgezogene Linie) gemäß der Erfindung vorliegen und auf der anderen Seite (gestrichelte Linien) gemäß dem Stand der Technik vorliegen, wobei
- Fig. 4a: die Windgeschwindigkeit einer berechneten Bö über der Zeit,
- Fig. 4b: eine Winkelverstellungsrate über der Zeit,
- Fig. 4c: eine Drehzahl über der Zeit,
- Fig. 4d: eine elektrische Leistung über der Zeit,
- Fig. 4e: ein Bremsmoment über der Zeit,
- Fig. 4f: ein Turmfußbiegemoment über der Zeit und
- Fig. 4g: ein Rotordrehmoment über der Zeit darstellt.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

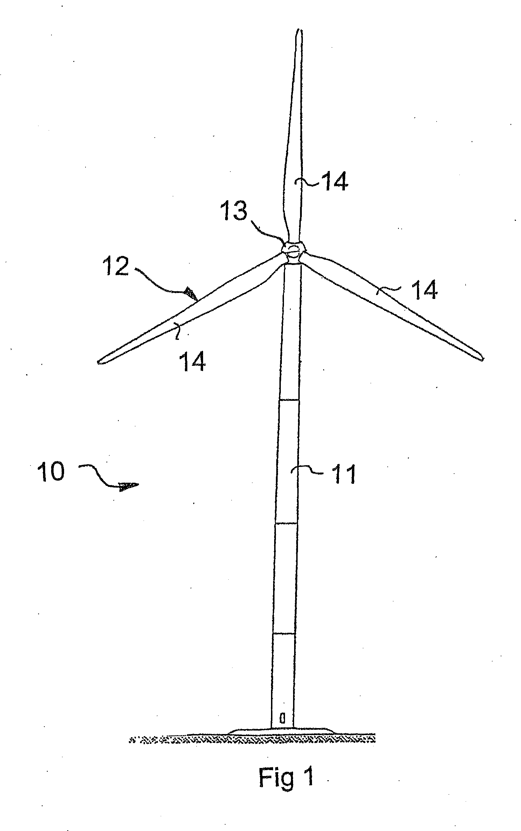

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 13 angebracht sind. Bei Windeinfall dreht der Rotor 12 in an sich bekannter Weise. Hierdurch kann Leistung von einem an den Rotor 12 bzw. an die Rotornabe 13 angeschlossenen Generator erzeugt werden und in ein Verbrauchernetz abgegeben werden.

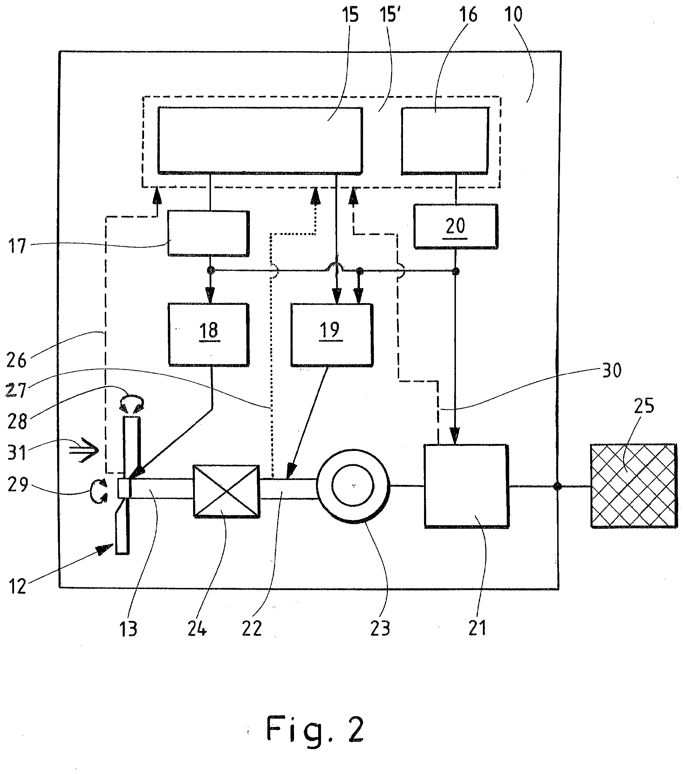

Fig. 2 zeigt schematisch wesentliche Komponenten der Windenergieanlage 10. Eine Betriebsführung 15, die auch als Betriebsführungseinrichtung oder Betriebsführungssystem bezeichnet werden kann, steuert und/oder regelt den Betrieb der Windenergieanlage 10. Nebengeordnet zu der Betriebsführung 15 ist eine Sicherheitsüberwachung 16, die mit einer Sicherheitskette 20 verbunden ist. Die Sicherheitskette 20 umfasst beispielsweise einen Vibrationsmelder, einen manuellen (Notaus-) Schalter und ein Drehzahlschaltrelais. Die Sicherheitskette 20 dient dazu, dass bei Vorliegen eines sicherheitsrelevanten Ereignisses, beispielsweise zu großen Vibrationen oder das Betätigen des Notausschalters durch eine Bedienperson, die Windenergieanlage in einen unkritischen Zustand heruntergefahren wird. Die Sicherheitskette 20 kann als Hardware-Kette ausgestaltet sein. Beim Auslösen der Sicherheitskette 20 wird, was durch den Pfeil zu den elektrischen Komponenten 21 angedeutet ist, der Generator 23 vom Netz 25 genommen und die Rotorwelle 9 bzw. die schnelle Welle 22 abgebremst, beispielsweise über die Blattverstellung 18 bzw. die mechanische Bremse 19 oder auch, was nicht dargestellt ist, unmittelbar unter Umgehung einer oder mehrerer Regel- oder Steuervorrichtungen wie die Blattverstellung 19. Die Sicherheitsüberwachung 16 kann auch derart ausgestaltet sein, dass diese die Betriebsführung 15 auf Funktionalität überprüft. Die Sicherheitsüberwachung 16 ist insofern als eine Art Watch-Dog vorzugsweise ausgeführt. Die Betriebsführung 15' kann, wie gestrichelt dargestellt ist, auch die Sicherheitsüberwachung 16 umfassen. Es handelt sich dann um eine Betriebsführung 15' mit integrierter Sicherheitsüberwachung 16.

Die Betriebsführung 15, 15' ist über entsprechende elektronische Datenleitungen mit einem Regler 17 und der Blattverstellung 18 verbunden und außerdem mit der mechanischen Bremse 19. Unter Blattverstellung 18 wird insbesondere ein Aktuator verstanden, der für eine Blattverstellung der Rotorblätter 14 sorgt. Entsprechend wird unter mechanischer Bremse 19 ein Aktuator verstanden, der dafür sorgt, dass die mechanische Bremse 19 in diesem Ausführungsbeispiel auf die schnelle Welle 22 wirkt. Die mechanische Bremse 19 kann auch auf die Rotorwelle 9 wirken, was allerdings nicht dargestellt ist.

Mit 26 ist eine Datenverbindung bezeichnet, die einen Rotorblattwinkel bzw. die Rotorblattwinkel der Rotorblätter 14 der Betriebsführung 15 bzw. 15' zuführt. Mit der Bezugsziffer 27 ist eine Datenverbindung dargestellt, die eine Ist-Drehzahl der schnellen Welle 22 der Betriebsführung 15 bzw. 15' zuführt. Mit 30 ist eine Datenleitung bezeichnet, die ein Störsignal, das in diesem Ausführungsbeispiel von elektrischen Komponenten 21 ausgeht, der Betriebsführung 15 bzw. 15' zuführt.

Der Betrieb der Windenergieanlage ist wie folgt. Durch Einfall von Wind wird der Rotor 12 gemäß der Rotationsrichtung 29 gedreht. Hierdurch dreht sich auch die Rotorwelle 9, die mit einem Getriebe 24 in einer Übersetzung von beispielsweise 1:100 die schnelle Welle 22 dreht. Hierdurch wird im Generator 23 eine elektrische Spannung generiert, die in den elektrischen Komponenten 21 geregelt, umgerichtet und/oder in eine Wechselspannung umgewandelt wird. Am Ausgang der elektrischen Komponenten 21 ist eine Verbindung zum Netz 25 vorgesehen, mit dem die Verbraucher mit Spannung bzw. elektrischer Leistung versorgt werden. Allgemein bekannte Regelungs- und Führungskonzepte von Windkraftanlagen sind beispielsweise in Kapitel 5 des Lehrbuches "Windkraftanlagen Systemauslegung, Netzintegration und Reglung" von Siegfried Heier, das oben angegeben ist, offenbart.

Bei Auftreten einer extremen Windbö 31 kann es im Zusammenhang mit einem Lastabfall des Generators, also insbesondere einem abrupten Wegfall der Netzlast, beispielsweise durch ein Umrichter-, ein Generator-, ein Transformator-, ein Netzversagen oder die Auslösung einer Sicherheitskette vorkommen, dass die Drehzahl des Rotors bzw. des Generators in sehr kritische und hohe Drehzahlen gelangen, so dass ein abruptes Abbremsen notwendig wird, was zu starkem Ermüden des Materials der Windenergieanlage oder zu Schädigungen führen kann.

Dem wirkt die Erfindung dadurch entgegen, dass der Rotor 12 bzw. die Rotorwelle 9 bzw. entsprechend die schnelle Welle 22 schon bei Auftreten eines entsprechenden Störsignals beispielsweise schon das Überschreiten einer relativ niedrigen dritten Drehzahlgrenze über eine relativ langsame Winkelverstellung 28 abgebremst wird. Durch die relativ kleine Winkelverstellungsrate von weniger als 6,5°/s wird ein lastarmes Abbremsen initiiert.

Sollte dieses Abbremsen aufgrund der Stärke der Windbö 31 nicht ausreichen und die Drehzahl des Rotors, der im Rahmen der Erfindung auch die Begriffe Triebstrang und Generatorläufer beinhaltet, eine vorgebbare erste Drehzahlgrenze überschreiten, die größer ist als die dritte Drehzahlgrenze, wird über das erfindungsgemäße Bremsprogramm durch die Betriebsführung 15 bzw. 15' die mechanische Bremse 19 initiiert. Erst wenn beide Bremsvarianten, nämlich die aerodynamische Bremsung über die Blattverstellung 18 und die mechanische Bremsung über die mechanische Bremse 19 nicht ausreichen und die Windbö 31 derart stark ist, dass eine zweite Drehzahlgrenze überschritten wird, wird das Sicherheitssystem 16, 20 ausgelöst.

Das Sicherheitssystem 16, 20 bewirkt eine zur Betriebsführung redundante Auslösung der Bremseinrichtungen und ggf. eine noch stärkere Bremswirkung, beispielsweise eine Blattverstellung mit höherer Winkelverstellungsrate und/oder eine Beaufschlagung einer hydraulischen Bremse mit höherem Hydraulikdruck. Die zweite Drehzahlgrenze ist allerdings derart ausgebildet, dass diese auch bei Lastabwurf des Generators nur bei derartig extremen Windböen erreicht wird, die mit einer Wahrscheinlichkeit vorkommen, die geringer ist als einmal in drei Monaten. In diesem speziellen Ausführungsbeispiel soll von einer Windbö ausgegangen werden, die eine Auftrittswahrscheinlichkeit von weniger als einmal im Jahr hat. Eine einfache Ausführung eines gut zu verwendenden Sicherheitssystems, das eine Sicherheitsüberwachung 16 und eine Sicherheitskette 20 umfasst, ist beispielsweise auf den Seiten 473 und 474 der Veröffentlichung "Wind Energy Handbook", das vorstehend genannt wurde, beschrieben.

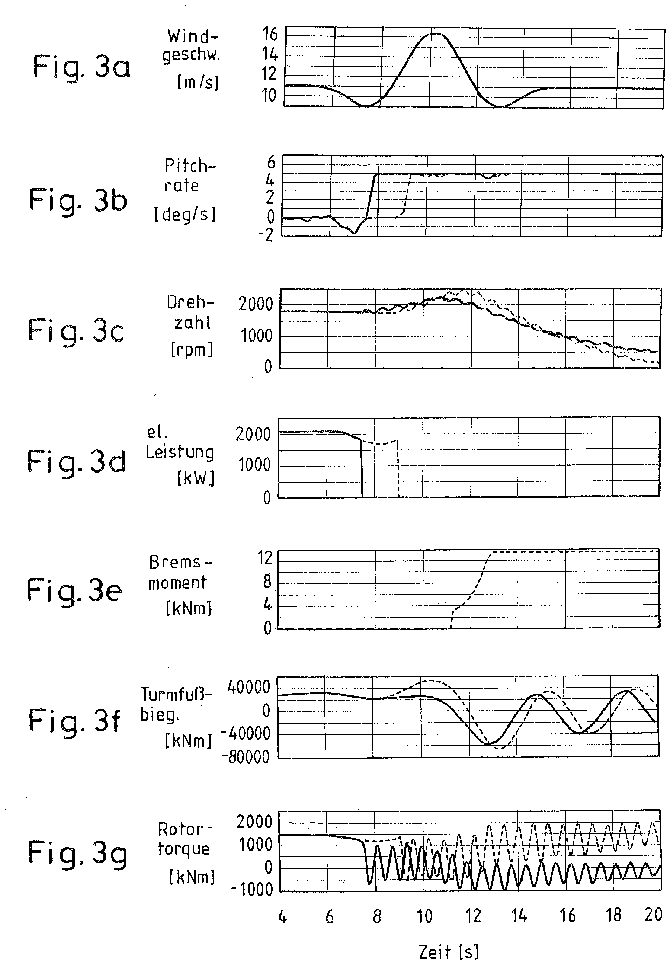

In den Figuren 3a bis 3g sind Diagramme dargestellt, mittels der die Erfindung für zwei verschiedene Lastfälle erläutert werden soll. Fig. 3a zeigt ein Diagramm der Windgeschwindigkeit über der Zeit, wobei dort eine übliche extreme Betriebsbö dargestellt ist, die beispielsweise in der Formel 5.1 auf Seite 215 des Dokuments "Wind Energy Handbook", das oben genauer angegeben ist, berechnet werden kann. Es handelt sich um eine Bö, die am betrachteten Standort mit einer Wahrscheinlichkeit von genau einmal im Jahr auftritt. Fig. 3d zeigt ein Diagramm der elektrischen Leistung in kW über der Zeit, wobei zwei Fälle dargestellt sind, nämlich der erste Fall, in dem bei ca. 7,5 Sekunden ein Lastabfall auftritt, nämlich im Minimum der Bö und im Vergleich dazu bei ungefähr 9 Sekunden, was einer Stelle entspricht, die ungefähr in der Mitte der aufsteigenden Flanke der Bö aus Fig. 3a erkennbar ist. Der zweite Fall ist der für die Windenergieanlage kritischere Fall und gestrichelt dargestellt. Zur sicheren Auslegung einer Windenergieanlage muss der Lastabfall zu einem beliebigen Zeitpunkt auftreten dürfen, ohne dass eine gefährliche Situation entsteht.

Fig. 3b zeigt die Winkelverstellungsrate in °/s eines Rotorblatts 14.

Es ist zunächst zu erkennen, dass in beiden Fällen aus Fig. 3d aufgrund der Form der Bö mit damit verbundenen geringeren Windgeschwindigkeiten die Pitchrate bzw. Winkelverstellungsrate zunächst negativ ist, d.h. die Rotorblätter werden in den Wind gestellt, damit ein höheres Drehmoment erzeugt werden kann. Bei Lastabfall wird in beiden Fällen die Winkelverstellungsrate durch die Betriebsführung relativ schnell auf einen Bereich von 5°/s eingestellt. Kleinere Einbrüche der Winkelverstellungsrate sind in einer kurzzeitigen Überlastung der Winkelverstellantriebe begründet.

Die durch die Bö erzeugte Drehzahl der schnellen Welle 22 ist in Fig. 3c dargestellt. Die Welligkeit des Drehzahlsignals ist in der unten beschriebenen Torsionsschwingung des Triebstrangs begründet. Im ersten unkritischeren Fall erhöht sich die Drehzahl auf knapp 2.200 Umdrehungen pro Minute und im kritischeren Fall (gestrichelte Linie) erhöht sich diese auf knapp unterhalb 2.500 Umdrehungen pro Minute. Für dieses Ausführungsbeispiel ist die zweite Drehzahlgrenze vorzugsweise auf 2.500 Umdrehungen pro Minute eingestellt. Durch Erhöhung der Auslösedrehzahl für die Sicherheitskette auf 2.500 Umdrehungen pro Minute wird die Auslösung der Sicherheitskette vermieden. Somit können die Lasten der Windenergieanlage deutlich reduziert werden. Die übliche Auslösedrehzahl für die Sicherheitskette bei Windenergieanlagen der Größenordnung von 1,5 MW und größer liegt beispielsweise bei 2.400 Umdrehungen pro Minute.

In Fig. 3e ist das Bremsmoment einer mechanischen Bremse über der Zeit in einem Diagramm schematisch dargestellt. Es ist zu erkennen, dass für den ersten Fall (durchgezogene Linie) die mechanische Bremse nicht aktiviert wird, da die erste Drehzahlgrenze nicht überschritten wird. Erst für den zweiten Fall (gestrichelte Linie) wird die mechanische Bremse bei Überschreitung der ersten Drehzahlgrenze von 2.260 Umdrehungen pro Minute aktiviert und greift bei ungefähr 11,5 Sekunden ein, und mit einer geringen Zeitverzögerung beginnt die mechanische Bremse zu wirken.

In Fig. 3f ist das Turmfußbiegemoment in kNm über der Zeit für die beiden Fälle dargestellt. Es ist deutlich zu erkennen, dass der zweite Fall (gestrichelt) im Hinblick auf das Turmfußbiegemoment kritischer ist. Es ist auch zu erkennen, dass sich in beiden Fällen eine gedämpfte Schwingung des Turms durch die Bö ergibt.

In Fig. 3g ist das Rotordrehmoment in kNm dargestellt. Auch in diesem Fall sind die unterschiedlichen Fälle in durchgezogener und gestrichelter Linie dargestellt. Erkennbar ist, dass der Triebstrang durch den plötzlichen Lastabfall in beiden Fällen zu einer starken Torsionsschwingung angeregt wird, vergleichbar mit einer vorgespannten Drehfeder die plötzlich losgelassen wird. Im zweiten (gestrichelt dargestellten Fall) ist die Verschiebung der Schwingung durch die einfallende mechanische Bremse erkennbar.

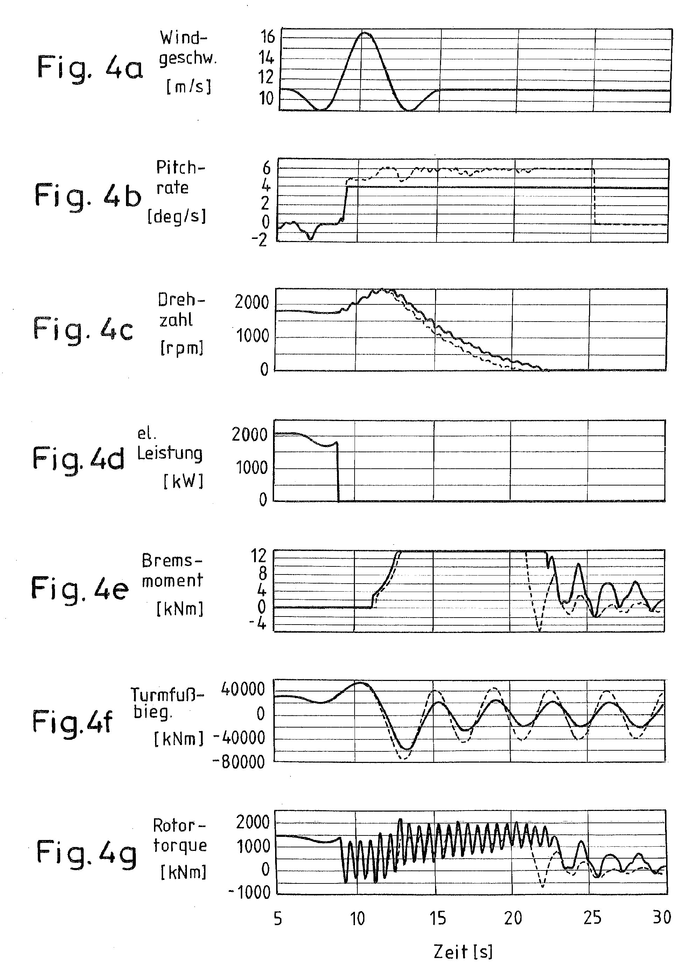

Um die Erfindung noch besser zu verdeutlichen, ist in den Figuren 4a bis 4g ein entsprechender Lastfall einer entsprechenden extremen Windbö (Jahresbö) gemäß Fig. 4a bei Lastabfall des Generators gemäß Fig. 4d dargestellt. Es ist eine unterschiedliche Verfahrensführung dargestellt, zum einen ein bevorzugter erfindungsgemäßer Betrieb der Windenergieanlage (durchgezogene Linien) und zum anderen eine etwas weniger bevorzugte allerdings erfinderische Betriebsführung. Diese weist im Gegensatz zum Stand der Technik bereits sehr geringe Blattverstellungsraten auf, die auf sehr niedrige Werte von 5°/s bzw. 6°/s bei Notstopp festgelegt wurden. Diese Betriebsführung weist jedoch keine erste Drehzahlgrenze zur Auslösung der Bremse über die Betriebsführung auf, sondern lediglich die Bremsauslösung über die Sicherheitseinrichtung bei einer Drehzahl von 2.400 Umdrehungen pro Minute. Zunächst wird dieser gestrichelt dargestellte Betriebsführungsablauf beschrieben.

Gemäß Fig. 4d ist zu erkennen, dass der Lastabfall ungefähr in der Mitte der aufsteigenden Flanke der Windbö aus Fig. 4a stattfindet, also im kritischen Bereich. Bei dem Beispiel wird beim Lastabwurf eine Blattverstellungsrate von 5°/s angefordert. Bei Überschreitung der Auslösedrehzahl von 2.400 Umdrehungen pro Minute (s. Fig. 4.c) wird über die Sicherheitseinrichtung ein Notstopp ausgelöst. Eine erhöhte Blattverstellrate von 6 °/ sec wird angefordert, die jedoch aufgrund einer knapp ausgelegten Winkelverstelleinrichtung nicht konstant eingehalten werden kann. Gleichzeitig wird die mechanische Bremse ausgelöst, so dass sich bei dieser Betriebsweise eine schnellere Drehzahlreduzierung ergibt als im durchgezogen dargestellten bevorzugten Ausführungsbeispiel. Hieraus resultieren relativ hohe Turmfußbiegemomente (Fig.4f).

In einem weiteren Beispiel wird gemäß der durchgezogenen Linie in Fig. 4b die Blattverstellungsrate auf weniger als 4,6°/s, insbesondere auf genau 4°/s eingestellt und geregelt. Bei Überschreitung der ersten Drehzahlgrenze (hier 2.270 Umdrehungen pro Minute) greift gemäß Fig. 4e die mechanische Bremse ein, also etwas früher als beim zuerst genannten Beispiel. Durch die geringe Blattverstellgeschwindigkeit ist insgesamt die Rotorverzögerung weniger abrupt. Entsprechend ergeben sich gemäß Fig. 4f günstigere Turmfußbiegemomente bei dem zweiten Beispiel (durchgezogene Linie) im Vergleich zum ersten Beispiel (gestrichelte Linie). Das Rotordrehmoment über der Zeit ist entsprechend in Fig. 4g dargestellt. Es ist eine begrenzte Zunahme der Triebstrangbelastung zu erkennen, die aber im Verhältnis zur Lastreduzierung im Turm akzeptabel ist, insbesondere deshalb, weil es sich um einen sehr seltenen Lastfall handelt. Erkennbar ist auch, dass negative Bremsmomente auftreten, weil der Rotor gegen die Bremse schwingt.

Die Erfindung betrifft somit die Auslegung und den Betrieb von Windenergieanlagen, insbesondere für die DLC1.5 (Design Load Case für eine Einjahresbetriebsbö mit Netzausfall). Bei herkömmlicher Betriebsführung können Turmfußbiegemomente von bis zu 100.000 kNm (inklusive Sicherheitsfaktor) auftreten. Ein erhöhter aerodynamischer Schub, der umso größer ist, je höher und dynamischer der Turm ist, d.h. je niedriger die Turmeigenfrequenz ist, kann die Eigendynamik des Turms zusätzlich verstärken.

Durch Änderung der Blattverstellungsrate von beispielsweise 6 auf 5°/s und Erhöhung der Auslösedrehzahl für die Sicherheitskette von 2.400 auf 2.500 Umdrehungen pro Minute und Vorsehen einer mechanischen Bremsleistung bei Überschreiten einer ersten Drehzahlgrenze von 2.200 Umdrehungen pro Minute kann ohne weiteres bei der gezeigten Beispielanlage mit 2 MW Nennleistung eine Reduzierung der Turmfußbiegemomente von 14 % erreicht werden. Die erste Drehzahlgrenze wird vorzugsweise so gewählt, dass bei Netzausfall bzw. Wegfall der Netzlast ohne Auftreten einer Bö die Blattverstellung ausreicht, um einen sicheren Betrieb ohne mechanische Bremse zu gewährleisten. Diese fällt nur dann ein, wenn zusätzlich noch zu einem ungünstigen Zeitpunkt eine Windbö einfällt. Bei Erhöhen der ersten Drehzahlgrenze, beispielsweise auf 2.230 oder 2.270 Umdrehungen pro Minute ergibt sich nur ein gering höheres Turmfußbiegemoment im Vergleich zu dem Fall bei 2.200 Umdrehungen pro Minute, weshalb dieses, wie in Figur 4 gezeigt, von Vorteil für eine einfache Parametrierung des Betriebsführungssystems bzw. der Betriebsführungseinrichtung sein kann, z.B. wenn diese Drehzahlgrenze bereits für andere Betriebsführungsabläufe vorhanden ist. Eine weitere Reduzierung des Turmfußbiegemoments kann dadurch erzielt werden, dass die Blattverstellungsrate weiter minimiert wird, beispielsweise vorzugsweise auf 4,5°/s oder weiter vorzugsweise auf 4°/s, wie in Fig. 4b gezeigt.

Die zweite Drehzahlgrenze kann bei einer 1,5 MW Anlage durch die Erfindung höher ausgestaltet werden als üblich, beispielsweise auf 2.570 Umdrehungen pro Minute oder sogar auf 2.660 Umdrehungen pro Minute. Die mechanische Bremse, die in Fig. 4e dargestellt ist, wird früher betätigt als bisher üblich. Außerdem wird eine hohe Blattverstellungsrate beispielsweise durch Verwendung einer ungeregelten Verstellung direkt über einen Akkumulator vermieden. Die Triebstrangbelastung wird hierbei, wie in Fig. 4g erkennbar, nicht deutlich verschlechtert. Vorzugsweise wird das Verfahren zum Betrieb der Windenergieanlage nur bei mittleren Windgeschwindigkeiten größer als 9 m/s und kleiner als ungefähr 20 m/s verwendet.

Vorstehend wurde die Erfindung in einigen miteinander verbundenen und auch in getrennten Varianten dargestellt. Die vorstehende Offenbarung ist für den Fachmann so zu verstehen, dass auch eine Kombination der getrennten Varianten vorgenommen werden kann. Insbesondere können Teile oder ein Teil des Gegenstandes einer erfindungsgemäßen Lösung, die in einem nachfolgenden nebengeordneten Anspruch seinen Niederschlag gefunden hat und/oder eine oder mehrere bevorzugte Ausführungsformen auch Merkmale einer weiteren erfindungsgemäßen Lösung sein, bei der dieses Merkmal oder diese Merkmale nicht unmittelbar in der Beschreibung im Zusammenhang mit dieser Lösung genannt sind.

### Bezugszeichenliste

- 10: Windenergieanlage
- 11: Turm
- 12: Rotor
- 13: Rotorwelle
- 14: Rotorblatt
- 15: Betriebsführung
- 15': Betriebsführung mit integrierter Sicherheitsüberwachung
- 16: Sicherheitsüberwachung
- 17: Regler
- 18: Blattverstellung
- 19: mechanische Bremse
- 20: Sicherheitskette
- 21: elektrische Komponenten
- 22: schnelle Welle
- 23: Generator (mit Läufer und Stator)
- 24: Getriebe
- 25: Netz
- 26: Datenverbindung
- 27: Datenverbindung
- 28: Winkelverstellung
- 29: Rotationsrichtung
- 30: Störsignal
- 31: Windbö

## Patentansprüche

1. Verfahren zum Betreiben einer Windenergieanlage (10), wobei die Windenergieanlage (10) einen Rotor (12, 13, 22), wenigstens ein winkelverstellbares Rotorblatt (14), einen Turm (11), eine Betriebsführungseinrichtung (15, 15') und ein Sicherheitssystem (16, 20) aufweist, mit den folgenden Verfahrensschritten:
durch die Betriebsführungseinrichtung (15, 15') geregeltes oder gesteuertes Betreiben der Windenergieanlage (10) zur elektrischen Spannungserzeugung bis zum Auftritt eines Störsignals (30),
**gekennzeichnet durch**
Auslösen des Sicherheitssystems (16, 20) bei Auftritt des Störsignals (30) und nachfolgendes Abbremsen des Rotors (12, 13, 22) über eine Winkelverstellung (28) mit einer über einen Zeitraum von einer halben bis einer ganzen Schwingungsperiode des Turms ermittelten, insbesondere anfänglichen, mittleren Winkelverstellungsrate von weniger als 6,5°/s des wenigstens einen Rotorblatts.

2. Verfahren nach Anspruch 1, **dadurch gekennzeichnet, dass** die mittlere Winkelverstellungsrate kleiner als 6°/s, insbesondere kleiner als 5°/s, insbesondere kleiner als 4,6°/s, ist.

3. Verfahren nach Anspruch 2, **dadurch gekennzeichnet, dass** die Winkelverstellungsrate gesteuert oder geregelt wird und mit zunehmender Vergrößerung des Blattwinkels und/oder Abnahme der Drehzahl weiter reduziert wird.

4. Verfahren nach Anspruch 2 oder 3, **dadurch gekennzeichnet, dass** das Störsignal (30) bei einem Lastabwurf eines Generators (23) gekoppelt mit einer extremen Windbö (31) vorliegt, wobei die Auftrittswahrscheinlichkeit der Winbö (31) weniger als einmal in drei Monaten, insbesondere weniger als einmal im Jahr, ist.

5. Windenergieanlage (10) mit einem Rotor (12, 13, 22), wenigstens einem winkelverstellbaren Rotorblatt (14), einem Turm (11), einer Betriebsführungseinrichtung (15, 15') und einem Sicherheitssystem (16, 20), wobei die Betriebsführungseinrichtung (15, 15') zum geregelten oder gesteuerten Betreiben der Windenergieanlage (10) zur elektrischen Spannungserzeugung bis zum Auftritt eines Störsignals (30) vorgesehen ist, **dadurch gekennzeichnet, dass** bei und/oder nach Auftritt des Störsignals (30) das Sicherheitssystem (16, 20) auslösbar ist und mittels des Sicherheitssystems (16, 20) ein Abbremsen des Rotors (12, 13, 22) über eine Winkelverstellung (28) mit einer über einen Zeitraum von einer halben bis einer ganzen Schwingungsperiode des Turms ermittelten, insbesondere anfänglichen, mittleren Winkelverstellungsrate von weniger als 6,5°/s des wenigstens einen Rotorblatts hervorgerufen wird.

6. Windenergieanlage (10) nach Anspruch 5, **dadurch gekennzeichnet, dass** die mittlere Winkelverstellungsrate kleiner als 6°/s, insbesondere kleiner als 5°/s, insbesondere kleiner als 4,5°/s, ist.

7. Windenergieanlage (10) nach Anspruch 6, **dadurch gekennzeichnet, dass** die Winkelverstellungsrate steuerbar oder regelbar ist und mit zunehmender Vergrößerung des Blattwinkels und/oder Abnahme der Drehzahl weiter reduzierbar ist,

8. Windenergieanlage (10) nach Anspruch 6 oder 7, **dadurch gekennzeichnet, dass** das Störsignal (30) bei einem Lastabwurf eines Generators (23) gekoppelt mit einer extremen Windbö (31) vorliegt, wobei die Auftrittswahrscheinlichkeit der Windbö (31) weniger als einmal in drei Monaten, insbesondere weniger als einmal im Jahr, ist.

## Claims

1. A method of operating a wind energy installation (10), wherein the wind energy installation (10) comprises a rotor (12, 13, 22), at least one rotor blade (14) with an adjustable angle, a tower (11), an operational control device (15, 15') and a safety system (16, 20), comprising the following method steps:
operating the wind energy installation (10) regulated or controlled by the operational control device (15, 15') for generating electrical voltage until the occurrence of a fault signal (30),
**characterized by**
triggering of the safety system (16, 20) on the occurrence of the fault signal (30) and subsequent braking of the rotor (12, 13, 22) by means of an angular adjustment (28) at an, in particular initial, average angular adjustment rate of less than 6.5°/s of the at least one rotor blade, detected over a time period of a half, up to a whole, vibration period of the tower.

2. The method according to claim 1, **characterized in that** the average angular adjustment rate is less than 6°/s, in particular less than 5°/s, in particular less than 4.6°/s.

3. The method according to claim 2, **characterized in that** the angular adjustment rate is controlled or regulated and is further reduced with increasing enlargement of the blade angle and/or reduction of the rotational speed.

4. The method according to claim 2 or 3, **characterized in that** the fault signal (30) in the event of load shedding by a generator (23) is coupled to an extreme gust of wind (31), wherein the probability of occurrence of the gust of wind (31) is less than once in three months, in particular less than once in a year.

5. A wind energy installation (10) comprising a rotor (12, 13, 22), at least one rotor blade (14) with an adjustable angle, a tower (11), an operational control device (15, 15') and a safety system (16, 20), wherein the operational control device (15, 15') is provided for the regulated or controlled operation of the wind energy installation (10) for generating electrical voltage until the occurrence of a fault signal (30), **characterized in that** the safety system (16, 20) is able to be triggered with and/or after the occurrence of the fault signal (30) and that, by means of the safety system (16, 20), a braking of the rotor (12, 13, 22) is caused by means of an angular adjustment (28) at an, in particular initial, average angular adjustment rate of less than 6.5°/s of the at least one rotor blade, detected over a time period of a half, up to a whole, vibration period of the tower.

6. The wind energy installation (10) according to claim 5, **characterized in that** the average angular adjustment rate is less than 6°/s, in particular less than 5°/s, in particular less than 4.5°/s.

7. The wind energy installation (10) according to claim 6, **characterized in that** the angular adjustment rate is able to be controlled or regulated and can be further reduced with increasing enlargement of the blade angle and/or reduction of the rotational speed.

8. The wind energy installation (10) according to claim 6 or 7, **characterized in that** the fault signal (30) in the event of load shedding by a generator (23) is coupled to an extreme gust of wind (31), wherein the probability of occurrence of the gust of wind (31) is less than once in three months, in particular less than once in a year.

## Revendications

1. Procédé servant à faire fonctionner une éolienne (10), dans lequel l'éolienne (10) présente un rotor (12, 13, 22), au moins une pale de rotor (14) à angle ajustable, une tour (11), un dispositif de pilotage (15, 15') et un système de sécurité (16, 20), avec les étapes de procédé qui suivent consistant à :
faire fonctionner avec réglage ou commande par le dispositif de pilotage (15, 15') l'éolienne (10) pour générer une tension électrique jusqu'à l'apparition d'un signal de dysfonctionnement (30),
**caractérisé par**
le déclenchement du système de sécurité (16, 20) lors de l'apparition du signal de dysfonctionnement (30) et le ralentissement consécutif du rotor (12, 13, 22) par l'intermédiaire d'un ajustement d'angle (28) avec une vitesse d'ajustement d'angle moyenne, en particulier initiale, déterminée sur une période de temps allant d'une demi-période d'oscillation jusqu'à une période d'oscillation complète, inférieure à 6,5°/s de l'au moins une pale.

2. Procédé selon la revendication 1, **caractérisé en ce que** la vitesse d'ajustement d'angle moyenne est inférieure à 6°/s, en particulier inférieure à 5°/s, en particulier inférieure à 4,6°/S.

3. Procédé selon la revendication 2, **caractérisé en ce que** la vitesse d'ajustement d'angle est commandée ou régulée et continue à être réduite au fur et à mesure de l'angle de pale augmente et/ou au fur et à mesure que la vitesse de rotation baisse.

4. Procédé selon la revendication 2 ou 3, **caractérisé en ce que** le signal de dysfonctionnement (30) est présent dans le cas d'un délestage de charges d'un générateur (23) couplé à une rafale de vent (31) extrême, dans lequel la probabilité d'apparition de la rafale de vent (31) est inférieure à une fois en trois mois, en particulier inférieure à une fois dans l'année.

5. Eolienne (10) avec un rotor (12, 13, 22), au moins une pale de rotor (14) à angle ajustable, une tour (11), un dispositif de pilotage (15, 15') et un système de sécurité (16, 20), dans laquelle le dispositif de pilotage (15, 15') est prévu pour faire fonctionner de manière réglée ou commandée l'éolienne (10) pour générer une tension électrique jusqu'à l'apparition d'un signal de dysfonctionnement (30), **caractérisée en ce que** lors et/ou après l'apparition du signal de dysfonctionnement (30), le système de sécurité (16, 20) peut être déclenché et un ralentissement du rotor (12, 13, 22) est provoqué au moyen du système de sécurité (16, 20) par l'intermédiaire d'un ajustement d'angle (28) à une vitesse d'ajustement d'angle moyenne en particulier initiale, déterminée sur une période de temps allant d'une demi-période d'oscillation jusqu'à une période d'oscillation complète, inférieure à 6,5°/s de l'au moins une pale de rotor.

6. Eolienne (10) selon la revendication 5, **caractérisée en ce que** la vitesse d'ajustement d'angle moyenne est inférieure à 6°/s, en particulier inférieure à 5°/s, en particulier inférieure à 4,5°/s.

7. Eolienne (10) selon la revendication 6, **caractérisée en ce que** la vitesse d'ajustement d'angle peut être commandée ou régulée et continue à être réduite au fur et à mesure que l'angle de pale augmente et/ou au fur et à mesure que la vitesse de rotation baisse.

8. Eolienne (10) selon la revendication 6 ou 7, **caractérisée en ce que** le signal de dysfonctionnement (30) est présent dans le cas d'un délestage de charges d'un générateur (23) couplé à une rafale de vent (31) extrême, dans laquelle la probabilité d'apparition de la rafale de vent (31) est inférieure à une fois en trois mois, en particulier inférieure à une fois dans l'année.
